# EUROPEAN PATENT SPECIFICATION

(11) **EP 2 383 868 B1**
(45) Date of publication and mention of the grant of the patent: **19.04.2017**
(21) Application number: 10161250.5
(22) Date of filing: 28.04.2010
(51) Int. Cl.: H02K 3/12, H02K 7/18

(54) **Winding arrangement**
Wickelanordnung
Agencement d'enroulement

(43) Date of publication of application: 02.11.2011
(73) Proprietor: Siemens Aktiengesellschaft, 80333 München (DE)
(72) Inventor: Booth, James Kenneth, 7330 Brande (DK)

(56) References cited:
- EP-A1- 2 166 644
- JP-A- 2007 329 985

## Description

The invention describes a winding arrangement for an armature of an electric machine. The invention further describes an armature for a generator, and a wind turbine with a generator.

In a small electric machine such as a small motor, an electric current is passed through coils, usually of copper, inducing a magnetic field and causing a rotor to rotate. Because of the small physical dimensions, the electric current and the magnetic field are also small. This allows miniaturization and a compact realization, for example as disclosed in JP 2007329985A, which describes essentially flat 'coils' with different winding types arranged to fit over magnetic stator teeth perpendicular to an axis of rotation.

For a large armature such as the rotor or stator of a wind turbine, the coil windings are generally quite thick and heavy owing to the physical dimensions of the generator and the high currents induced. The windings can be made of thick wire such as a multi-stranded wire, which is then wound onto the armature, usually the stator. To this end, the armature is usually made with multiple parallel slots arranged axially along the outside for accommodating the windings. Instead of wrapping the wire onto the armature, pre-shaped windings can be formed and inserted or 'dropped into' the slots of the armature. Such a winding arrangement is disclosed in EP 2 166 644 A1, which discloses three different types of pre-shaped winding, wherein the winding ends of each winding type are shaped so that the different windings can be arranged side by side in the stator slots with nested winding ends. Such a pre-shaped winding generally comprises a closed loop comprising a "go" section and a "return" section" held in two armature slots. A coil comprises a plurality of such windings connected in series or parallel, and the connection is usually made at one end of the armature where the windings extend beyond the ends of the slots. As will be known to the skilled person, successive windings of a coil can be connected by allowing a strand of a multi-stranded wire to extend from one winding of a coil to the next winding of that coil, or by connecting windings of a coil to a bus bar arranged circumferentially about the armature, or in any other appropriate manner.

A multi-phase generator has the same number of coils as phases. Here, the windings are placed in the slots such that the slots for the "go" and "return" sections of one particular winding of a coil enclose or flank a number of slots for the "go" and "return" sections of the remaining coils. The windings of the different coils must overlap in some way at the armature ends. To still permit a relatively straightforward stator winding assembly, the winding ends of the windings for a large stator are generally shaped so that a winding can be dropped into place without having to lift the previous winding. Because of the large dimensions involved, the material used for the windings presents a considerable cost factor. The winding overhang or winding head, i.e. the part of the winding that extends beyond the stator slots, should therefore be kept as short as possible. EP 2 166 645 A1 describes an approach in which each coil is made of closed-loop windings with a particular winding overhang geometry. The geometries of the different windings are shaped to permit the windings of the neighbouring coils to pass each other in a compact and close-fitting realisation, so that the overall amount of copper used can be reduced. However, this approach has the disadvantage that the winding overhangs have different lengths owing to the different geometries, resulting in different overall resistances of the coils. In turn, this leads to load imbalances between the phases. To avoid such imbalances, additional material must be included in the 'short' coils to effectively make these as long as the longest coil. Evidently, this adds to the overall cost of the stator winding scheme and is therefore unsatisfactory.

It is therefore an object of the invention to provide an improved coil winding arrangement.

The object of the invention is achieved by the winding arrangement of claim 1 for an armature of an electric machine, the armature of claim 12, the wind turbine of claim 13, and the use of such a winding arrangement according to claim 14.

According to the invention, the winding arrangement for an armature comprises a plurality of coils and a plurality of distinct winding types, wherein the coils are arranged on the armature such that each coil comprises the same number of windings and the same number of each of the distinct winding types, wherein the windings are slotted into parallel axial armature slots.

An obvious advantage of the invention is that, since the lengths of the coils are essentially the same for all phases, less material is used compared to existing solutions in which the end windings are extended to obtain a balanced phase layout. Since the coils are all essentially of the same length, all phases draw essentially the same current. Furthermore, since the phases are balanced, the electrical losses in the windings are constant and there are essentially no voltage imbalances between the phases. This leads to a favourable reduction in the overall loss of the generator, thereby favourably increasing the overall performance of the electrical machine. Also, since it is not necessary in the winding scheme according to the invention to add 'extra material' to balance the coils, the material requirements in the end windings is kept at a favourable minimum, so that the total weight of the generator is favourably reduced.

According to the invention, an armature for a generator comprises a plurality of coils, wherein the coils are arranged or 'wound' on the armature according to such a winding arrangement. Here, the term 'wound' is used in the established sense, even though the windings of a large armature are generally too thick and heavy to be flexible.

A wind turbine according to the invention comprises a generator with a rotor and a stator, and a plurality of coils is arranged on the stator according to such a winding arrangement.

Such a winding arrangement is preferably used to wind the coils on a stator of a generator for a wind turbine.

Particularly advantageous embodiments and features of the invention are given by the dependent claims, as revealed in the following description. Features of the different embodiments can be combined as appropriate to give further embodiments.

The armature of the electric machine can be the stator or the rotor, depending on the way in which the electric machine - for example a generator - is constructed. Usually, however, particularly in large generators, it is the stator that carries the coil windings. In the following therefore, but without restricting the invention in any way, it is assumed that the stator carries the windings, although the winding scheme according to the invention would be equally applicable to a realisation in which the rotor of a generator carries the windings.

Because of the large dimensions involved for a stator of a large generator, as described above, the coils of the stator are not wound using wire wrapped around the stator, as might be the case for a small motor, but comprise pre-formed windings that can be inserted or even dropped into place in the stator slots. The windings are successively inserted into slots of the stator or stator segments. A coil can comprise a series of pre-formed windings that are inserted into the appropriate slots and then electrically connected. Preferably, the windings can be realised as 'closed loop' windings, i.e. each winding comprises a closed loop, and successive windings of a coil are electrically connected after inserting into the armature. Therefore, in a preferred embodiment of the invention, winding comprises a first ("go") winding body section for placement in a first stator slot, a second ("return") winding body section for placement in a second stator slot, which first and second winding body sections are joined at each end by an end section, which end section extends beyond the stator in an essentially 180° fold so that the first and second winding body sections are essentially parallel, and wherein the end section of each distinct winding type comprises a distinct winding end geometry, whereby the distinct winding end geometries of the different winding types allow successive windings to be placed into the stator slots without having to lift a previously placed winding. In the following, without restricting the invention in any way, it can be assumed that a coil winding comprises a single layer winding.

A generator can have one or more phases, and therefore one or more coils. Any number of different winding types could be connected together for a coil. However, for the reasons explained above, the winding end geometries must be different to allow the windings to overlap in the case of a multi-phase generator. In a further preferred embodiment of the invention, the winding arrangement comprises an equal number of coils and distinct winding types. This makes it straightforward to arrive at coils of essentially equal length.

Generally, the electric power distribution grid uses three-phase electric power. Therefore, in a further preferred embodiment of the invention, the winding arrangement according to the invention comprises three coils and therefore three distinct winding types in a three-phase, two-pole stator winding arrangement.

To allow the winding overhangs of the three coils to cross in a compact manner, in a further preferred embodiment of the invention a first winding type comprises a first winding end geometry, a second winding type comprises a second winding end geometry, and a third winding type comprises a third winding end geometry. Thereby, the first winding end geometry preferably comprises an end section essentially in line with the first and second winding body sections, i.e. the first winding can essentially comprise a simple closed loop in a plane. The remaining winding types can then be designed to pass around the first winding type. Preferably, the second winding end geometry comprises an end section tilted by essentially 45° with respect to its first and second winding body sections. For example, the end section of the second winding type can be tilted 'upwards' or 'downwards'. The second winding type also comprises a closed loop, so that the winding end geometry in this case also comprises a 180° fold so that the "go" and "return" sections can be slotted into parallel axial stator slots. Preferably, the third winding end geometry comprises an end section tilted by essentially 90° with respect to the first and second winding body sections. In a similar manner to the second winding type described here, the end section of the third winding type can be tilted 'upwards' or 'downwards'. The third winding type also comprises a closed loop, so that the winding end geometry in this case also comprises a 180° fold, allowing the "go" and "return" sections to be slotted into parallel axial stator slots.

The three different winding types described above are easy to manufacture and install, since successive windings can be slotted into the stator slots without having to lift or move previously inserted windings. For example, all windings of the third type, with a 90° downward tilt, can be slotted onto the stator. Then, all windings of the second type, with a 45° downward tilt, are slotted onto the stator. Finally, all windings of the first type are inserted into the remaining slots.

The windings for each coil can then be electrically connected, for example using connections to bus bars arranged circumferentially about the stator. Such a connection can be made by allowing one or more wires or conductors of a winding to make contact with an exposed bus bar.

Preferably, each coil comprises a distinct sequence of winding types. In a particularly preferred embodiment of the invention, a first coil winding sequence comprises the first winding type, second winding type and third winding type in sequence; the second coil winding sequence comprises the second winding type, third winding type and first winding type in sequence; and the third coil winding sequence comprises the third winding type, first winding type and second winding type in sequence. Preferably, to ensure an optimally balanced arrangement, each coil comprises the same number of windings, and the total number of windings is evenly divisible by the phase number of the generator. For example, for the three-phase generator described above, three coils and three different winding types are used, and each coil preferably comprises 3N windings. In this way, each coil comprises the same number of each of the different winding types, and the overall lengths of the coils are therefore essentially equal. Such a winding scheme therefore provides a balanced load in a simple and straightforward manner, while at the same time being favourably economical with the amount of metal used.

Other objects and features of the present invention will become apparent from the following detailed descriptions considered in conjunction with the accompanying drawings. It is to be understood, however, that the drawings are designed solely for the purposes of illustration and not as a definition of the limits of the invention.

### BRIEF DESCRIPTION OF THE DRAWINGS

- Fig. 1: shows a schematic representation of a generator in a wind turbine;
- Fig. 2: shows a schematic representation of a prior art winding scheme for a stator of a generator;
- Fig. 3: shows a stator segment with an arrangement of windings according to the invention;
- Fig. 4: shows a schematic representation of the end sections of the windings if Fig. 3;
- Fig. 5: shows a schematic representation of three coil sequences for a winding scheme according to the invention.

In the drawings, like reference numbers refer to like objects throughout. Objects in the diagrams are not necessarily drawn to scale.

### DETAILED DESCRIPTION OF THE EMBODIMENTS

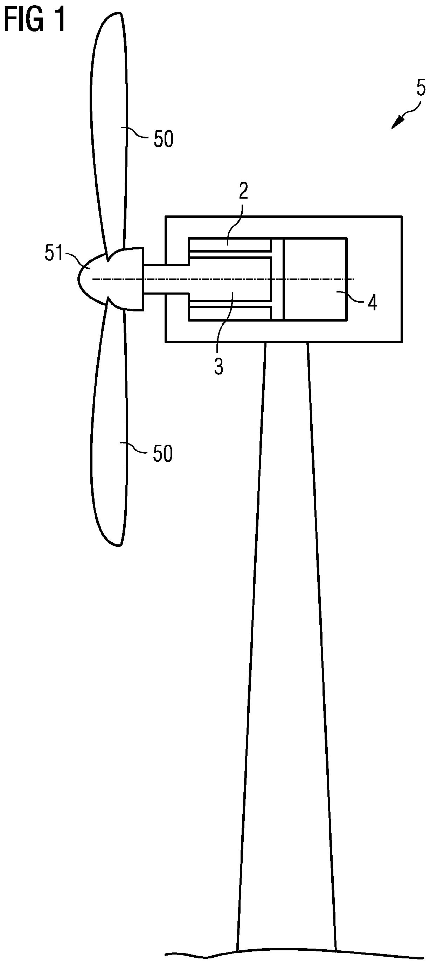

Fig. 1 shows a very simplified representation of a generator 4 in a wind turbine 5. For the sake of simplicity, only the relevant components are indicated, and other components such as a gearbox, controller, etc. are not shown. Pressure exerted on the blades 50 of the wind turbine 5 causes the hub 51 or spinner to turn, thus causing a rotor 3 to rotate. The rotor 3 is enclosed in a stator 2, about which a plurality of coils (not shown in the diagram) is wound. The generator 4 operates as an induction motor, with a current being induced in the coils. The principle of operation of such a generator will be clear to the skilled person and need not be described in detail here.

Because of the large currents (for example in the region of 200 - 500 Amps for 2 - 10 MW wind turbines), the windings must be correspondingly dimensioned. For a wind turbine stator, the windings are typically made of stacked metal bars or strips with a cross-section in the region of 20 mm x 100 mm. These metal strips are held in stator slots arranged around the outside of the stator, which can be up to 3 m in length. Generally, because of the large dimensions (a wind turbine stator can have a diameter in the region of 3 m to 7 m or more), the stator generally comprises a set of stator segments.

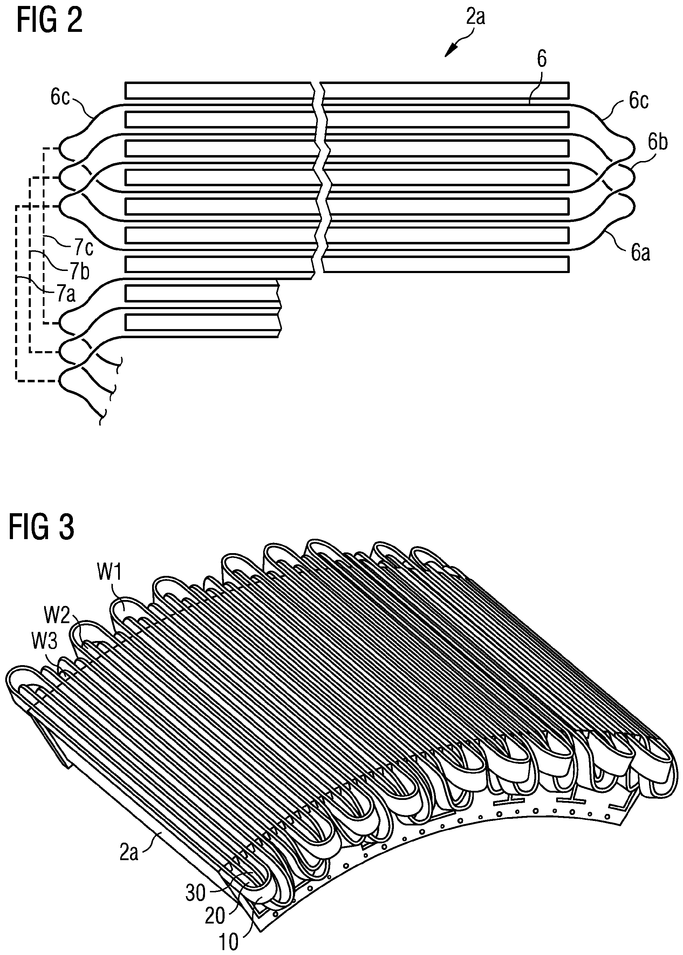

A prior art winding scheme is illustrated with the aid of Fig. 2, which shows a greatly simplified top view of a stator segment 2a with slots 6 for accommodating windings 6a, 6b, 6c. Here, three coils are wound about the stator 2, and each coil comprises a sequence of the same type of winding 6a, 6b, 6c. Each winding 6a, 6b, 6c is connected to another winding 6a, 6b, 6c of the same type by means of a connecting strip 7a, 7b, 7c or bus bar. A winding 6a, 6b, 6c is essentially a flat strip, bent back on itself to give a closed loop, and slotted into two parallel slots 6, whereby the two slots 6 required by one winding type 6a are separated by two further slots 6 for the other two winding types 6b, 6c. The different windings must cross each other and must be shaped to allow the windings to be inserted into the slots in a straightforward manner. This means that the winding ends must be shaped accordingly. For example, each winding end can be designed to protrude some distance from the stator and can be bent or twisted with a 180° fold so that the go and return sides are at different heights. In this way, neighbouring windings can simply be placed successively into the stator slots. However, such a solution requires a certain amount of additional metal, usually copper, to allow the winding overhangs to cross, so that this type of solution is relatively costly. The solution mentioned in the introduction, with differently shaped winding end overhangs for each coil, is less costly, but results in an unsatisfactory performance with load imbalance owing to the different overall lengths of the coils.

Fig. 3 shows a segment 2a of a stator with an arrangement of windings 10, 20, 30 in a winding scheme 1 according to the invention. Each winding 10, 20, 30 is shown as a metal strip folded to give a closed loop. Three distinct winding types W1, W2, W3 are shown. Each coil comprises a sequence of windings 10, 20, 30, whereby a coil sequence comprises each of the different winding types W1, W2, W3 in turn, as will be explained below.

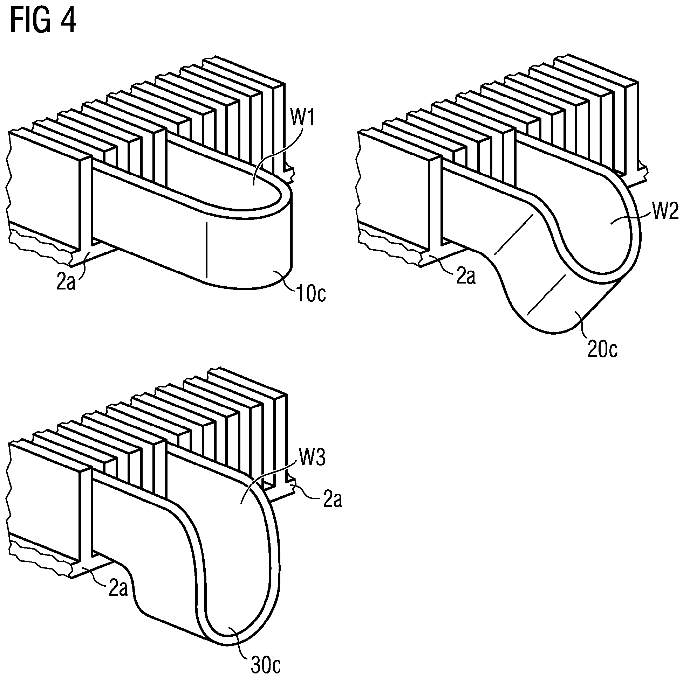

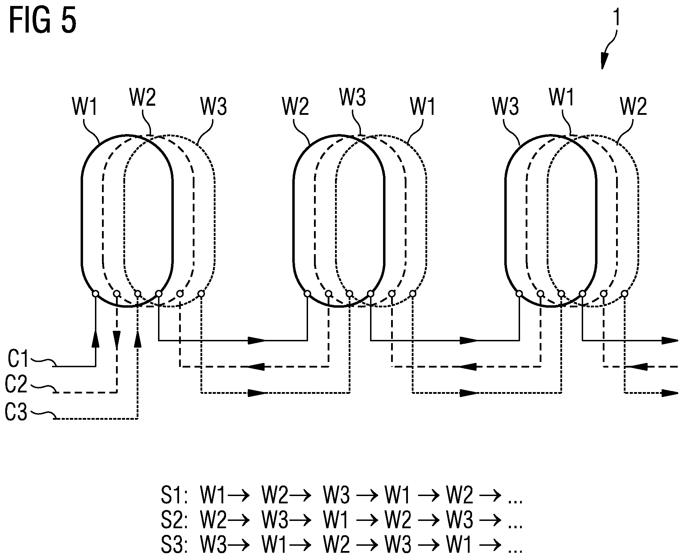

Fig. 4 shows schematic representations of the end sections 10C, 20C, 30C of the different winding types W1, W2, W3 shown in Fig. 3. For the sake of clarity, each winding is shown on its own, but it is to be understood that windings of different types will be positioned in adjacent stator slots as shown in Fig. 3. The first winding type W1 is essentially a straightforward closed loop W1, and the end section 10C of this winding type W1 essentially comprises a 180° fold. A second winding type W2 has an end section 20C that does not extend as far beyond the stator end as the first winding type W1, but makes an approximately 45° bend before being folded back. A third winding type W3 has an end section 30C that also does not extend as far beyond the stator end as the first winding type W1, and makes an approximately 90° bend before being folded back. These different end-sections or overhangs 10C, 20C, 30C allow the windings 10, 20, 30 to be placed into the stator slots 6 in a straightforward manner. For example, the stator can be wound by first inserting all windings of the third type W3, then all windings of the second type W2, and finally all windings of the first type W1. Because of the winding end geometries, the windings can be inserted without having to lift or move the previously placed windings. The windings of a particular coil are then electrically connected in a predefined sequence, as will be described with the aid of Fig. 5, for example by joining a conductor 10D, 20D, 30D of a winding 10, 20, 30 to a bus-bar B1, B2, B3.

The upper part of Fig. 5 shows a schematic representation of three coil sequences S1, S2, S3 for a winding scheme 1 according to the invention. The order in which the windings are connected are given by the sequences S1, S2, S3 shown in the lower part of the diagram. The first coil winding sequence S1 for the first coil C1 comprises a winding of the first winding type W1, a winding of second winding type W2 and a winding of third winding type W3 in sequence. This pattern repeats for the entire first coil C1. The second coil winding sequence S2 for the second coil C2 comprises a winding of the second winding type W2, a winding of third winding type W3 and a winding of first winding type W1 in sequence. This pattern repeats for the entire second coil C2. The third coil winding sequence S3 for the third coil C3 comprises a winding of the third winding type W2, a winding of first winding type W3 and a winding of second winding type W1 in sequence, and this pattern repeats for the entire third coil C3. In the upper part of the diagram, the arrows indicate the current flow direction in the different coils C1, C2, C3 (so that the 'go' winding sections of the first and third coils C1, C3 occupy slots on either side of the slot containing the 'return' winding section of the second coil C2; while the 'return' winding sections of the first and third coils C1, C3 occupy slots on either side of the slot containing the 'go' winding section of the second coil C2). Since each coil C1, C2, C3 comprises a sequence S1, S2, S3 in which the winding types W1, W2, W3 appear essentially equally often, the overall lengths of the coils C1, C2, C3 are also essentially equal. In this way, the winding arrangement according to the invention reduces or effectively eliminates load imbalances while at the same time reducing the amount of metal required for the windings. Although the windings are indicated here as closed loops, the windings of the winding scheme 1 could equally well be realised to be open at both ends, and the connections could be made by bus-bars at both ends of the armature.

Although the present invention has been disclosed in the form of preferred embodiments and variations thereon, it will be understood that numerous additional modifications and variations could be made thereto without departing from the scope of the invention. For example, the hub of the wind turbine can turn a drive shaft connected to a gearbox, which can be realised to turn the armature of a generator at a speed that is more suitable for generating electricity for a power grid.

For the sake of clarity, it is to be understood that the use of "a" or "an" throughout this application does not exclude a plurality, and "comprising" does not exclude other steps or elements.

## Claims

1. A winding arrangement (1) for an armature (2) of an electric machine (4), which winding arrangement (1) comprises a plurality of coils (C1, C2, C3) and a plurality of distinct winding types (W1, W2, W3), wherein the coils (C1, C2, C3) are arranged on the armature (2) such that each coil comprises the same number of windings (10, 20, 30), wherein the windings (10, 20, 30) are slotted into parallel axial armature slots (6) **characterized in that** each coil (C1, C2, C3) comprises the same number of each of the distinct winding types (W1, W2, W3).

2. A winding arrangement according to claim 1, wherein a winding (10, 20, 30) comprises a first (*go*) winding body section (10A, 20A, 30A) for placement in a first armature slot (22), a second winding body section (10B, 20B, 30B) for placement in a second armature slot (22), which first and second winding body sections (10A, 10B, 20A, 20B, 30A, 30B) are joined by an end section (10C, 20C, 30C), which end section (10C, 20C, 30C) extends beyond the armature (2) in an essentially 180° fold, and wherein the end section (10C, 20C, 30C) of each distinct winding type (W1, W2, W3) comprises a distinct winding end geometry.

3. A winding arrangement according to claim 1 or claim 2, comprising an equal number of coils (C1, C2, C3) and distinct winding types (W1, W2, W3).

4. A winding arrangement according to claim 3, comprising three coils (C1, C2, C3) and three distinct winding types (W1, W2, W3).

5. A winding arrangement according to claim 4, wherein a first winding type (W1) comprises a first winding end geometry, a second winding type (W2) comprises a second winding end geometry, and a third winding type (W3) comprises a third winding end geometry.

6. A winding arrangement according to claim 5, wherein the first winding end geometry comprises an end section (10C) essentially in line with the first and second winding body sections (10A, 10B).

7. A winding arrangement according to claim 5, wherein the second winding end geometry comprises an end section (20C) tilted by essentially 45° with respect to the first and second winding body sections (20A, 20B).

8. A winding arrangement according to claim 5, wherein the third winding end geometry comprises an end section (30C) tilted by essentially 90° with respect to the first and second winding body sections (30A, 30B).

9. A winding arrangement according to any of the preceding claims, wherein each coil (C1, C2, C3) comprises a distinct sequence (S1, S2, S3) of winding types (W1, W2, W3).

10. A winding arrangement according to claim 9, wherein the first coil winding sequence (S1) comprises the first winding type (W1), second winding type (W2) and third winding type (W3) in sequence; the second coil winding sequence (S2) comprises the second winding type (W2), third winding type (W3) and first winding type (W1) in sequence; and the third coil winding sequence (S3) comprises the third winding type (W2), first winding type (W3) and second winding type (W1) in sequence.

11. A winding arrangement according to any of the preceding claims, wherein a coil winding (10, 20, 30) comprises a single layer winding (10, 20, 30).

12. An armature (2) for a generator (4), comprising a plurality of coils (C1, C2, C3), wherein the coils (C1, C2, C3) are arranged on the armature (2) according to the winding arrangement of any of claims 1 to 11.

13. A wind turbine (5) with a generator (4) comprising a rotor (3) and a stator (2), and wherein a plurality of coils (C1, C2, C3) is arranged on the stator (2) according to the winding arrangement of any of claims 1 to 11.

14. Use of a winding arrangement (1) according to any of claims 1 to 11 in a generator (4) of a wind turbine (5).

## Patentansprüche

1. Wickelanordnung (1) für einen Anker (2) einer elektrischen Maschine (4), wobei die Wickelanordnung (1) eine Vielzahl von Spulen (C1, C2, C3) und eine Vielzahl von unterschiedlichen Wickelarten (W1, W2, W3) umfasst, wobei die Spulen (C1, C2, C3) an dem Anker (2) derart angeordnet sind, dass jede Spule die gleiche Anzahl von Windungen (10, 20, 30) umfasst, wobei die Windungen (10, 20, 30) in parallele axiale Ankernuten (6) eingelegt werden, **dadurch gekennzeichnet, dass** jede Spule (C1, C2, C3) die gleiche Anzahl jeder der unterschiedlichen Wickelarten (W1, W2, W3) aufweist.

2. Wickelanordnung nach Anspruch 1, wobei eine Windung (10, 20, 30) einen ersten (go) Wickelkörperabschnitt (10A, 20A, 30A) zur Platzierung in einer ersten Ankernut (22) und einen zweiten Wickelkörperabschnitt (10B, 20B, 30B) zur Platzierung in einer zweiten Ankernut (22) umfasst, wobei die ersten und zweiten Wickelkörperabschnitte (10A, 10B, 20A, 20B, 30A, 30B) durch einen Endabschnitt (10C, 20C, 30C) miteinander verbunden sind, wobei sich der Endabschnitt (10C, 20C, 30C) in einer im Wesentlichen 180°-Faltung über den Anker (2) hinaus erstreckt und wobei der Endabschnitt (10C, 20C, 30C) jeder unterschiedlichen Wickelart (W1, W2, W3) eine unterschiedliche Geometrie des Windungsendes aufweist.

3. Wickelanordnung nach Anspruch 1 oder Anspruch 2, die eine gleiche Anzahl von Spulen (C1, C2, C3) und unterschiedlichen Wickelarten (W1, W2, W3) umfasst.

4. Wickelanordnung nach Anspruch 3, die drei Spulen (C1, C2, C3) und drei unterschiedliche Wickelarten (W1, W2, W3) umfasst.

5. Wickelanordnung nach Anspruch 4, wobei eine erste Wickelart (W1) eine erste Geometrie des Windungsendes, eine zweite Wickelart (W2) eine zweite Geometrie des Windungsendes und eine dritte Wickelart (W3) eine dritte Geometrie des Windungsendes umfasst.

6. Wickelanordnung nach Anspruch 5, wobei die erste Geometrie des Windungsendes einen Endabschnitt (10C) umfasst, der im Wesentlichen mit den ersten und zweiten Wickelkörperabschnitten (10A, 10B) fluchtet.

7. Wickelanordnung nach Anspruch 5, wobei die zweite Geometrie des Windungsendes einen Endabschnitt (20C) umfasst, der hinsichtlich der ersten und zweiten Wickelkörperabschnitte (20A, 20B) im Wesentlichen um 45° geneigt ist.

8. Wickelanordnung nach Anspruch 5, wobei die dritte Geometrie des Windungsendes einen Endabschnitt (30C) umfasst, der hinsichtlich der ersten und zweiten Wickelkörperabschnitte (30A, 30B) im Wesentlichen um 90° geneigt ist.

9. Wickelanordnung nach einem der vorhergehenden Ansprüche, wobei jede Spule (C1, C2, C3) eine unterschiedliche Folge (S1, S2, S3) von Wickelarten (W1, W2, 3) umfasst.

10. Wickelanordnung nach Anspruch 9, wobei die erste Spulenwickelfolge (S1) der Reihe nach die erste Wickelart (W1), die zweite Wickelart (W2) und die dritte Wickelart (W3) umfasst; wobei die zweite Spulenwickelfolge (S2) der Reihe nach die zweite Wickelart (W2), die dritte Wickelart (W3) und die erste Wickelart (W1) umfasst; und wobei die dritte Spulenwickelfolge (S3) der Reihe nach die dritte Wickelart (W3), die erste Wickelart (W1) und die zweite Wickelart (W2) umfasst.

11. Wickelanordnung nach einem der vorhergehenden Ansprüche, wobei eine Spulenwicklung (10, 20, 30) eine Einschichtwindung (10, 20, 30) umfasst.

12. Anker (2) für einen Generator (4), welcher eine Vielzahl von Spulen (C1, C2, C3) umfasst, wobei die Spulen (C1, C2, C3) an dem Anker (2) gemäß der Wickelanordnung nach einem der Ansprüche 1 bis 11 angeordnet sind.

13. Windturbine (5) mit einem Generator (4), der einen Läufer (3) und einen Ständer (2) umfasst, wobei eine Vielzahl von Spulen (C1, C2, C3) an dem Ständer (2) gemäß der Wickelanordnung nach einem der Ansprüche 1 bis 11 angeordnet ist.

14. Verwendung einer Wickelanordnung (1) nach einem der Ansprüche 1 bis 11 in einem Generator (4) einer Windturbine (5).

## Revendications

1. Agencement (1) d'enroulements pour un induit (2) d'une machine électrique (4), lequel agencement (1) d'enroulements comprend une pluralité de bobines (C1, C2, C3) et une pluralité de types d'enroulements (W1, W2, W3) distincts, dans lequel les bobines (C1, C2, C3) sont agencées sur l'induit (2) de telle manière que chaque bobine comprend le même nombre d'enroulements (10, 20, 30), dans lequel les enroulements (10, 20, 30) sont fendus en fentes (6) axiales parallèles d'induit,
**caractérisé en ce que** chaque bobine (C1, C2, C3) comprend le même nombre de chacun des types d'enroulements (W1, W2, W3) distincts.

2. Agencement d'enroulements selon la revendication 1, dans lequel un enroulement (10, 20, 30) comprend une première (*go*) section de corps (10A, 20A, 30A) d'enroulement pour une mise en place dans une première fente (22) d'induit, une deuxième section de corps (10B, 20B, 30B) d'enroulement pour une mise en place dans une deuxième fente (22) d'induit, lesquelles première et deuxième sections de corps (10A, 10B, 20A, 20B, 30A, 30B) d'enroulement sont jointes par une section d'extrémité (10C, 20C, 30C), laquelle section d'extrémité (10C, 20C, 30C) s'étend au-delà de l'induit (2) dans un pli à sensiblement 180°, et dans lequel la section d'extrémité (10C, 20C, 30C) de chaque type d'enroulement (W1, W2, W3) distinct comprend une géométrie distincte d'extrémité d'enroulement.

3. Agencement d'enroulements selon la revendication 1 ou la revendication 2, comprenant un nombre égal de bobines (C1, C2, C3) et de types d'enroulements (W1, W2, W3) distincts.

4. Agencement d'enroulements selon la revendication 3, comprenant trois bobines (C1, C2, C3) et trois types d'enroulements (W1, W2, W3) distincts.

5. Agencement d'enroulements selon la revendication 4, dans lequel un premier type d'enroulement (W1) comprend une première géométrie d'extrémité d'enroulement, un deuxième type d'enroulement (W2) comprend une deuxième géométrie d'extrémité d'enroulement, et un troisième type d'enroulement (W3) comprend une troisième géométrie d'extrémité d'enroulement.

6. Agencement d'enroulements selon la revendication 5, dans lequel la première géométrie d'extrémité d'enroulement comprend une section d'extrémité (10C) essentiellement en ligne avec les première et deuxième sections de corps (10A, 10B) d'enroulement.

7. Agencement d'enroulements selon la revendication 5, dans lequel la deuxième géométrie d'extrémité d'enroulement comprend une section d'extrémité (20C) inclinée à essentiellement 45° par rapport aux première et deuxième sections de corps (20A, 20B) d'enroulement.

8. Agencement d'enroulements selon la revendication 5, dans lequel la troisième géométrie d'extrémité d'enroulement comprend une section d'extrémité (30C) inclinée à essentiellement 90° par rapport aux première et deuxième sections de corps (30A, 30B) d'enroulement.

9. Agencement d'enroulements selon l'une quelconque des revendications précédentes, dans lequel chaque bobine (C1, C2, C3) comprend une séquence (S1, S2, S3) distincte de types d'enroulements (W1, W2, W3).

10. Agencement d'enroulements selon la revendication 9, dans lequel la première séquence (S1) d'enroulements de bobines comprend le premier type d'enroulement (W1), le deuxième type d'enroulement (W2) et le troisième type d'enroulement (W3) en séquence ; la deuxième séquence (S2) d'enroulements de bobines comprend le deuxième type d'enroulement (W2), le troisième type d'enroulement (W3) et le premier type d'enroulement (W1) en séquence ; et la troisième séquence (S3) d'enroulements de bobines comprend le troisième type d'enroulement (W2), le premier type d'enroulement (W3) et le deuxième type d'enroulement (W1) en séquence.

11. Agencement d'enroulements selon l'une quelconque des revendications précédentes, dans lequel un enroulement (10, 20, 30) de bobine comprend un enroulement (10, 20, 30) en couche unique.

12. Induit (2) pour un générateur (4), comprenant une pluralité de bobines (C1, C2, C3), dans lequel les bobines (C1, C2, C3) sont agencées sur l'induit (2) conformément à l'agencement d'enroulements selon l'une quelconque des revendications 1 à 11.

13. Éolienne (5) avec un générateur (4) comprenant un rotor (3) et un stator (2), et dans laquelle une pluralité de bobines (C1, C2, C3) sont agencées sur le stator (2) conformément à l'agencement d'enroulements selon l'une quelconque des revendications 1 à 11.

14. Utilisation d'un agencement (1) d'enroulements selon l'une quelconque des revendications 1 à 11 dans un générateur (4) d'une éolienne (5).
